(19) Europäisches Patentamt
European Patent Office
Office européen des brevets

(11) **EP 4 651 223 A1**

(12) **EUROPEAN PATENT APPLICATION**

(43) Date of publication:
**19.11.2025 Bulletin 2025/47**

(21) Application number: **25168984.0**

(22) Date of filing: **07.04.2025**

(51) International Patent Classification (IPC):
$H01M\ 4/131^{(2010.01)}$   $H01M\ 4/136^{(2010.01)}$
$H01M\ 4/36^{(2006.01)}$   $H01M\ 4/505^{(2010.01)}$
$H01M\ 4/525^{(2010.01)}$   $H01M\ 4/58^{(2010.01)}$
$H01M\ 10/0525^{(2010.01)}$   $H01M\ 4/02^{(2006.01)}$

(52) Cooperative Patent Classification (CPC):
H01M 4/525; H01M 4/131; H01M 4/136;
H01M 4/362; H01M 4/364; H01M 4/505;
H01M 4/5825; H01M 10/0525; H01M 2004/021;
H01M 2004/028

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **25.04.2024   KR 20240055131**

(71) Applicant: **SAMSUNG SDI CO., LTD.
Yongin-si, Gyeonggi-do 17084 (KR)**

(72) Inventors:
• **KIM, Young-Ki
17084 Yongin-si (KR)**
• **CHOI, Aram
17084 Yongin-si (KR)**
• **KIM, Sangmi
17084 Yongin-si (KR)**
• **DOO, Sungwook
17084 Yongin-si (KR)**
• **KANG, Gwiwoon
17084 Yongin-si (KR)**
• **LEE, Soonrewl
17084 Yongin-si (KR)**

(74) Representative: **Marks & Clerk LLP
15 Fetter Lane
London EC4A 1BW (GB)**

(54) **POSITIVE ELECTRODE ACTIVE MATERIAL FOR RECHARGEABLE LITHIUM BATTERY, POSITIVE ELECTRODE INCLUDING THE SAME, AND RECHARGEABLE LITHIUM BATTERY INCLUDING THE SAME**

(57)   Positive electrode active materials for a rechargeable lithium battery, positive electrodes including the positive electrode active material, and rechargeable lithium batteries including the positive electrode active material are provided. The positive electrode active material comprises first particles comprising a compound of $Li_{a1}Mn_{z1}Fe_{x1}A_{y1}PO_{4-c1}$ and second particles comprising a compound of $Li_{a2}Ni_{x2}Mn_{z2}X_{c2}O_{2-b2}$. The cobalt (Co) content (e.g., amount) in the positive electrode active material is about 100 ppm or less.

FIG. 6A

EP 4 651 223 A1

**Description**

**BACKGROUND**

**1. Field**

One or more embodiments of the present disclosure relate to a positive electrode active material for a rechargeable lithium battery, a positive electrode including the positive electrode active material, and a rechargeable lithium battery including the positive electrode active material, for example, to a positive electrode active material including an olivine-based lithium compound, a positive electrode including the olivine-based lithium compound, and a rechargeable lithium battery including the olivine-based lithium compound.

**2. Description of the Related Art**

Recently, with the rapid spread and popularization of electronic devices that use batteries, such as mobile phones, laptop computers, and/or electric vehicles, the demand for such batteries, e.g., rechargeable batteries, with relatively high energy density and high capacity is rapidly increasing. Accordingly, research and development to improve the performance of such rechargeable batteries, e.g., rechargeable lithium batteries, is being actively conducted.

A rechargeable lithium battery is a battery including a positive electrode and a negative electrode each containing active materials capable of intercalation and deintercalation of lithium ions, and an electrolyte, and produces electrical energy through the oxidation and reduction reactions when lithium ions are intercalated into and deintercalated from the positive electrode and negative electrode (e.g., intercalated into the positive electrode and/or deintercalated from the negative electrode during the discharge process).

In order to provide positive electrode active materials with high energy density, a high operating voltage, and/or high conductivity, technologies using mixtures of different lithium transition metal oxides as positive electrode materials are being attempted and pursued (i.e., in the pursuit of advanced positive electrode active materials that exhibit superior energy density, elevated operating voltages, and enhanced electrical conductivity, there is an ongoing exploration and implementation of technologies that incorporate composite mixtures of various lithium transition metal oxides).

**SUMMARY**

One or more aspects of embodiments of the present disclosure are directed toward a positive electrode active material having a high energy density, a high operating voltage, and a high conductivity.

One or more aspects of embodiments of the present disclosure are directed toward a rechargeable lithium battery having a high energy density, a high operating voltage, and a high conductivity by including the positive electrode active material.

Additional aspects will be set forth in part in the description which follows and, in part, will be apparent from the description, or may be learned by practice of the presented embodiments of the disclosure.

According to one or more embodiments of the present disclosure, a positive electrode active material includes first particles including a compound of Chemical Formula 1, and second particles including a compound of Chemical Formula 2.

$$\text{Chemical Formula 1} \qquad Li_{a1}Mn_{z1}Fe_{x1}A_{y1}PO_{4-c1}$$

In Chemical Formula 1, $0.8 < a1 \leq 1.2$, $0.8 \leq x1 \leq 0.9$, $0 \leq y1 \leq 0.05$, $0.1 \leq z1 \leq 0.2$, $0 \leq c1 \leq 0.05$, $x1 + y1 + z1 = 1$, and A includes (e.g., be) at least one element selected from among the group consisting of titanium (Ti), magnesium (Mg), vanadium (V), and niobium (Nb).

$$\text{Chemical Formula 2} \qquad Li_{a2}Ni_{x2}Mn_{z2}X_{c2}O_{2-b2}$$

In Chemical Formula 2, $0.8 < a2 \leq 1.2$, $0.7 \leq x2 \leq 0.8$, $0.2 \leq z2 \leq 0.3$, $0 \leq b2 \leq 0.05$, $0 \leq c2 \leq 0.05$, $x2 + z2 + c2 = 1$, and X includes (e.g., be) at least one element selected from the group consisting of aluminium (Al), titanium (Ti), magnesium (Mg), zirconium (Zr), molybdenum (Mo), and niobium (Nb). A cobalt (Co) content (e.g., amount) in the positive electrode active material may be about 100 ppm or less.

According to one or more embodiments of the present disclosure, a positive electrode for a rechargeable lithium battery includes a positive electrode current collector and a positive electrode active material layer on the positive electrode current collector. The positive electrode active material layer includes the positive electrode active material, a conductive material, and a binder.

According to one or more embodiments of the present disclosure, a rechargeable lithium battery includes the positive electrode, a negative electrode including a negative electrode current collector and a negative electrode active material layer on the negative electrode current collector, and a separator between the positive electrode and the negative electrode.

At least some of the above and other features of the invention are set out in the claims.

## BRIEF DESCRIPTION OF DRAWINGS

The accompanying drawings are included to provide a further understanding of the present disclosure, and are incorporated in and constitute a part of this disclosure. The drawings illustrate example embodiments of the disclosure and, together with the description, serve to explain principles of the disclosure. The above and other aspects, features, and advantages of certain embodiments of the present disclosure will be more apparent from the following description taken in conjunction with the accompanying drawings.

FIG. 1 illustrates a simplified conceptual diagram showing a rechargeable lithium battery according to one or more embodiments of the present disclosure.

FIGS. 2 to 5 each illustrate a simplified diagram showing a rechargeable lithium battery according to one or more embodiments of the present disclosure, where FIG. 2 illustrates a cylindrical battery, FIG. 3 illustrates a prismatic battery, and FIGS. 4 and 5 each illustrate a pouch-type or kind battery.

FIG. 6A illustrates an enlarged view showing a positive electrode active material layer of a rechargeable lithium battery according to one or more embodiments of the present disclosure.

FIG. 6B is an enlarged view of the positive electrode active material layer shown in FIG. 6A.

FIG. 6C illustrates an enlarged view showing a positive electrode active material layer of a rechargeable lithium battery according to one or more embodiments of the present disclosure.

FIG. 7A illustrates scanning electron microscope (SEM) images showing a positive electrode active material of Preparation Example 1-3 of the present disclosure.

FIG. 7B illustrates scanning electron microscope (SEM) images showing a positive electrode active material of Preparation Example 1-5 of the present disclosure.

FIG. 8A illustrates scanning electron microscope (SEM) images showing a positive electrode active material of Preparation Example 1-7 of the present disclosure.

FIG. 8B illustrates scanning electron microscope (SEM) images showing a positive electrode active material of Preparation Example 1-6 of the present disclosure.

## DETAILED DESCRIPTION

In order to sufficiently understand the configurations and aspects of the present disclosure, one or more embodiments of the present disclosure will be described with reference to the accompanying drawings. It should be noted, however, that the present disclosure is not limited to the following example embodiments, and may be implemented in one or more suitable forms. Rather, the example embodiments are provided only to illustrate the present disclosure and let those skilled in the art fully know the scope of the disclosure.

Hereinafter, embodiments of the disclosure will be described clearly and in more detail so that a person skilled in the art can easily implement the disclosure.

In the present disclosure, it will be understood that, if (e.g., when) an element is referred to as being on another element, the element may be directly on the other element or intervening elements may be present therebetween. In contrast, if (e.g., when) an element is referred to as being "directly on" another element, there are no intervening elements present. In the drawings, thicknesses of some components may be exaggerated for effectively explaining the technical contents. Like reference numerals refer to like elements throughout the present disclosure, and duplicative descriptions thereof may not be provided for conciseness.

Unless otherwise specially noted in the present disclosure, the singular forms "a," "an," and "the" are intended to include the plural forms as well, unless the context clearly indicates otherwise. Further, the utilization of "may" when describing embodiments of the present disclosure refers to "one or more embodiments of the present disclosure". In addition, unless otherwise specially noted, the phrase "A or B" or "A and/or B" or "A/B" may indicate "A but not B", "B but not A", and "A and B". The terms "comprise(s)/include(s)" and/or "comprising/including" used in the present disclosure do not exclude the presence or addition of one or more other components.

As used herein, the term "combination thereof" may refer to a mixture, a stack, a composite, a copolymer, an alloy, a blend, or a reaction product of the constituents.

Unless otherwise specially defined in the present disclosure, a particle diameter/size may be an average particle diameter/size. Also, a particle diameter/size refers to an average particle diameter/size (D50), which refers to the diameter/size of particles at a cumulative volume of about 50 vol% in a particle size distribution. D50 refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size. D90 refers to the average diameter (or size) of particles whose cumulative volume corresponds to 90 vol% in the particle size distribution (e.g., cumulative distribution), and refers to the value of the particle size corresponding to 90% from the smallest particle when the total number of particles is 100% in the distribution curve accumulated in the order of the smallest particle size to the largest particle size. D10 refers to the average diameter (or size) of particles whose cumulative volume corresponds to 10 vol% in the particle size distribution (e.g., cumulative distribution), and refers to the value of the particle size corresponding to 10% from the smallest particle when the total number of particles is 100% in the distribution curve accumulated in the order of the smallest particle size to the largest particle size. The average particle diameter/size (D50) may be measured by a method widely suitable to those skilled in the art, for example, by a particle size analyzer, for example, HORIBA, LA-950 laser particle size analyzer, or by using a transmission electron microscope (TEM) image or a scanning electron microscope (SEM) image. In one or more embodiments, the average particle diameter/size may be measured by a measurement device using dynamic light-scattering, wherein data analysis is conducted to count the number of particles for each particle size range, and an average particle diameter/size (D50) value may then be obtained through calculation. Also, a laser scattering method may be utilized to measure the average particle diameter/size. In the laser scattering method, target particles are dispersed in a dispersion medium, then, introduced into a commercial laser diffraction particle-diameter measurement instrument (e.g., MT3000 of Microtrac), and irradiated to ultrasonic waves of about 28 kHz at an output of about 60 W, and the average particle diameter/size (D50) based on about 50% of particle diameter distribution may be calculated in the measurement instrument. In the present disclosure, when particles are spherical, "diameter" indicates an average particle diameter, and when the particles are non-spherical, the "diameter" indicates a major axis length.

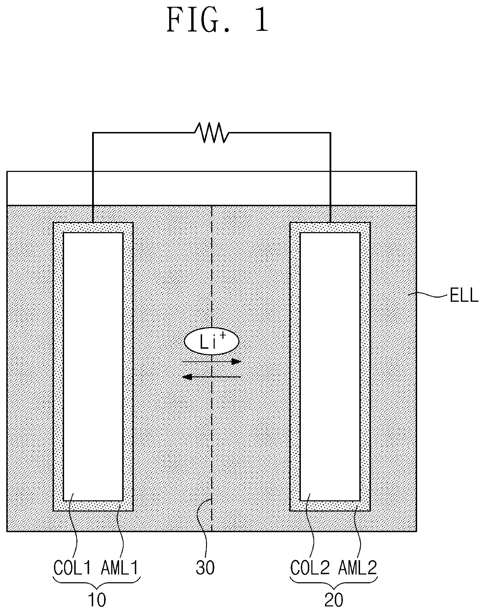

FIG. 1 is a simplified conceptual diagram of a rechargeable lithium battery according to one or more embodiments of the present disclosure. Referring to FIG. 1, a rechargeable lithium battery may include a positive electrode 10, a negative electrode 20, a separator 30, and an electrolyte solution ELL.

The positive electrode 10 and the negative electrode 20 may be spaced and/or apart (e.g., spaced apart or separated) from each other by the separator 30. The separator 30 may be arranged between the positive electrode 10 and the negative electrode 20. The positive electrode 10, the negative electrode 20, and the separator 30 may be in contact with the electrolyte solution ELL. For example, the positive electrode 10, the negative electrode 20, and the separator 30 may be immersed in (e.g., impregnated with) the electrolyte solution ELL.

The electrolyte solution ELL may be a medium for transferring lithium ions between the positive electrode 10 and the negative electrode 20. In the electrolyte solution ELL, the lithium ions may move through the separator 30 toward the positive electrode 10 or the negative electrode 20.

## Positive Electrode 10

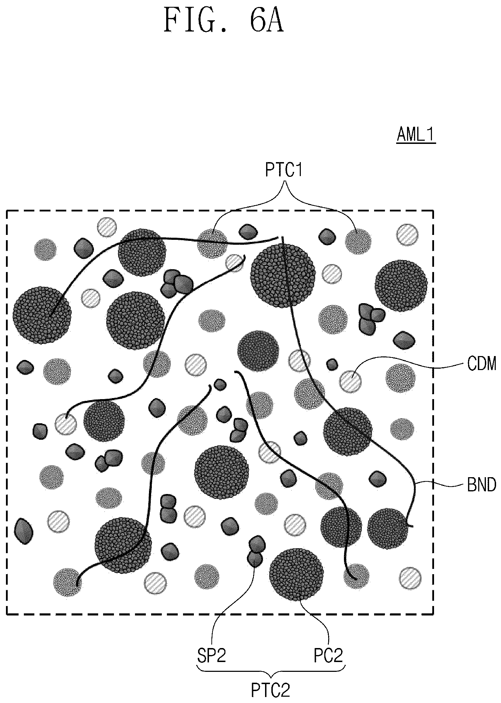

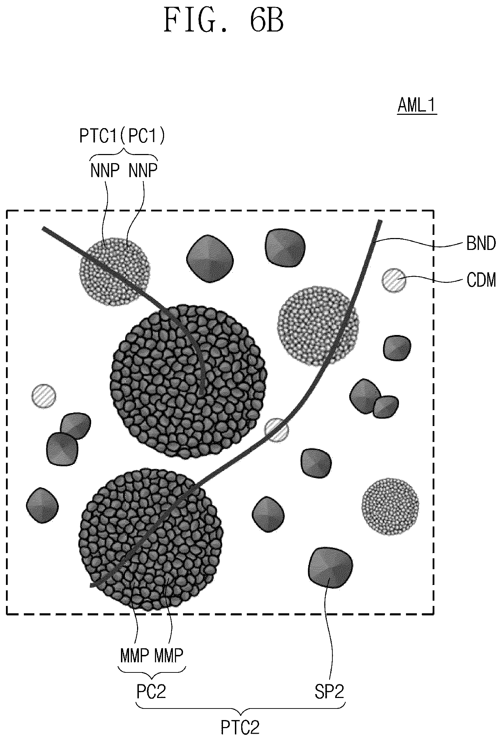

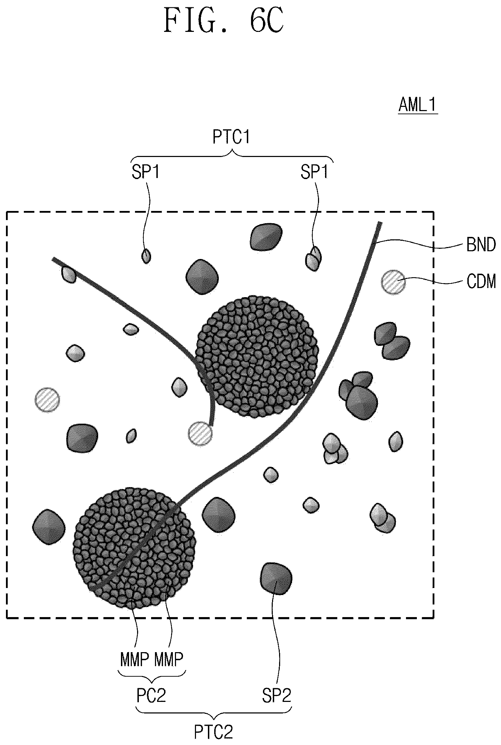

The positive electrode 10 for a rechargeable lithium battery includes a current collector COL1 and a positive electrode active material layer AML1 on the current collector COL1. The positive electrode active material layer AML1 may include a positive electrode active material (e.g., in a form of particles) and further includes a binder and a conductive material (e.g., electron conductor). Detailed description on the positive electrode active material layer AML1 according to one or more embodiments of the present disclosure will be explained later with reference to FIGS. 6A, 6B, and 6C. In one or more embodiments, aluminium (Al) may be used as the current collector COL1, but embodiments of the present disclosure are not limited thereto.

## Negative Electrode 20

The negative electrode 20 for a rechargeable lithium battery may include a current collector COL2, and a negative electrode active material layer AML2 on the current collector COL2. The negative electrode active material layer AML2 may include a negative electrode active material (e.g., in a form of particles) and may further include a binder and/or a conductive material (e.g., electron conductor).

For example, the negative electrode active material layer AML2 may include about 90 wt% to about 99 wt% of the negative electrode active material, about 0.5 wt% to about 5 wt% of the binder, and about 0 wt% to about 5 wt% of the conductive material, based on 100 wt% of a total weight of the negative electrode active material layer.

The binder may serve to attach the negative electrode active material particles well to each other and also to attach the negative electrode active material well to the current collector COL2. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be selected from among a styrene-butadiene rubber, a (meth)acrylated styrene-butadiene rubber, a (meth)acrylonitrile-butadiene rubber, a (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and/or a (e.g., any suitable)combination thereof.

When an aqueous binder is used as the binder of the negative electrode, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, or a combination thereof.

The conductive material (e.g., electron conductor) may be used to impart conductivity to the electrode. Any material that does not cause chemical change and is an electron conductive material may be used in the battery. Non-limiting examples of the conductive material may include: a carbon-based material such as natural graphite, artificial graphite, carbon black, acetylene black, Ketjen black, a carbon fiber, a carbon nanofiber, and/or carbon nanotube; a metal-based material including copper, nickel, aluminium, silver, and/or the like, in a form of a metal powder or a metal fiber; a conductive polymer such as a polyphenylene derivative; and/or a (e.g., any suitable) mixture thereof.

The current collector COL2 may use a copper foil, a nickel foil, a stainless steel foil, a titanium foil, a nickel foam, a copper foam, a polymer substrate coated with a conductive metal, and/or a (e.g., any suitable) combination thereof.

**Negative Electrode Active Material**

The negative electrode active material in the negative electrode active material layer AML2 may include a material that reversibly intercalates/deintercalates lithium ions, a lithium metal, a lithium metal alloy, a material capable of doping and de-doping lithium, or a transition metal oxide.

The material that reversibly intercalates/deintercalates lithium ions may include a carbon-based negative electrode active material, for example, crystalline carbon, amorphous carbon, or a combination thereof. The crystalline carbon may be graphite such as non-shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, and/or the like.

The lithium metal alloy includes an alloy of lithium and a metal selected from among sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminium (Al), and tin (Sn).

The material capable of doping and de-doping lithium may be a Si-based negative electrode active material or a Sn-based negative electrode active material. The Si-based negative electrode active material may include silicon, a silicon-carbon composite, $SiO_x$ ($0 < x \leq 2$), a Si-Q alloy (where Q is selected from among an alkali metal, an alkaline earth metal, a Group 13 element, a Group 14 element (except for Si), a Group 15 element, a Group 16 element, a transition metal, a rare-earth element, and a (e.g., any suitable) combination thereof), and/or a (e.g., any suitable) combination thereof. The Sn-based negative electrode active material may include Sn, $SnO_k$ ($0<k\leq2$) (e.g., $SnO_2$), a Sn-based alloy, and/or a (e.g., any suitable) combination thereof.

The silicon-carbon composite may be a composite of silicon and amorphous carbon (e.g., the composite being in a form of particles). According to one or more embodiments, the silicon-carbon composite may be in a form of silicon particles and amorphous carbon coated on the surface of each of the silicon particles. For example, in one or more embodiments, the silicon-carbon composite may include a secondary particle (core), in which primary silicon particles are assembled, and an amorphous carbon coating layer (shell) on the surface of the secondary particle. The amorphous carbon may also be between the primary silicon particles, and, for example, the primary silicon particles may each be coated with the amorphous carbon. The secondary particle may exist dispersed in an amorphous carbon matrix.

In one or more embodiments, the silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

**Separator 30**

Depending on the type or kind of the rechargeable lithium battery, the separator 30 may be present between the positive electrode 10 and the negative electrode 20. The separator 30 may include polyethylene, polypropylene, polyvinylidene fluoride, or a multilayer film of two or more layers thereof, for example, a mixed multilayer film such as a polyethylene/polypropylene two-layer separator, a polyethylene/polypropylene/polyethylene three-layer separator, a polypropylene/polyethylene/polypropylene three-layer separator, and/or the like.

The separator 30 may include a porous substrate and a coating layer including an organic material, an inorganic material, and/or a (e.g., any suitable) combination thereof on a surface (e.g., one surface or both surfaces (e.g., two opposite surfaces) of the porous substrate.

The porous substrate may be a polymer film formed of any one polymer selected from among polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles selected from among $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but the present disclosure is not limited thereto.

In one or more embodiments, the organic material and the inorganic material may be mixed in one coating layer, or a coating layer including an organic material and a coating layer including an inorganic material may be stacked.

**Electrolyte Solution ELL**

The electrolyte solution ELL for a rechargeable lithium battery may include a non-aqueous organic solvent and a lithium salt.

The non-aqueous organic solvent may serve as a medium for transmitting ions taking part in the electrochemical reaction of a battery.

The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), diethyl methyl carbonate (EMC), ethylene carbonate (EC), propylene carbonate (PC), butylene carbonate (BC), and/or the like.

The ester-based solvent may include methyl acetate, ethyl acetate, n-propyl acetate, dimethyl acetate, methyl propionate, ethyl propionate, decanolide, mevalonolactone, valerolactone, caprolactone, and/or the like.

The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In addition, the ketone-based solvent may include cyclohexanone, and/or the like. The alcohol-based solvent may include ethanol, isopropyl alcohol, and/or the like, and the aprotic solvent may include nitriles such as R-CN (wherein R is a C2 to C20 linear, branched, or cyclic hydrocarbon group, and may include a double bond, an aromatic ring, or an ether bond), and/or the like; amides such as dimethylformamide; dioxolanes such as 1,3-dioxolane, 1,4-dioxolane, and/or the like; sulfolanes; and/or the like.

The non-aqueous organic solvents may be used alone or in combination of two or more.

In addition, when using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the non-aqueous organic solvent supplies lithium ions in a rechargeable lithium battery, enables a basic operation of the rechargeable lithium battery, and improves transportation of the lithium ions between positive and negative electrodes. Examples of the lithium salt include at least one selected from among $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl) imide, LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethanesulfonate, lithium difluoro(oxalato)borate(LiDFOB), lithium difluorobis(oxalato)phosphate (LiDFBOP), and lithium bis(oxalato)borate (LiBOB).

**Rechargeable Lithium Battery**

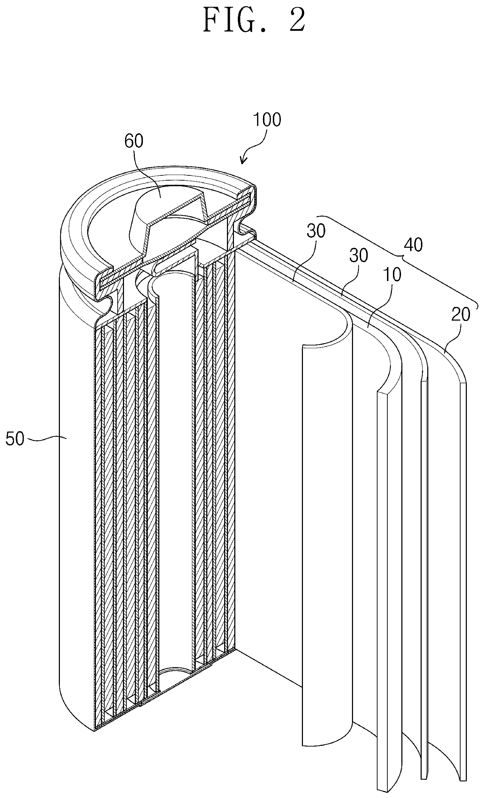

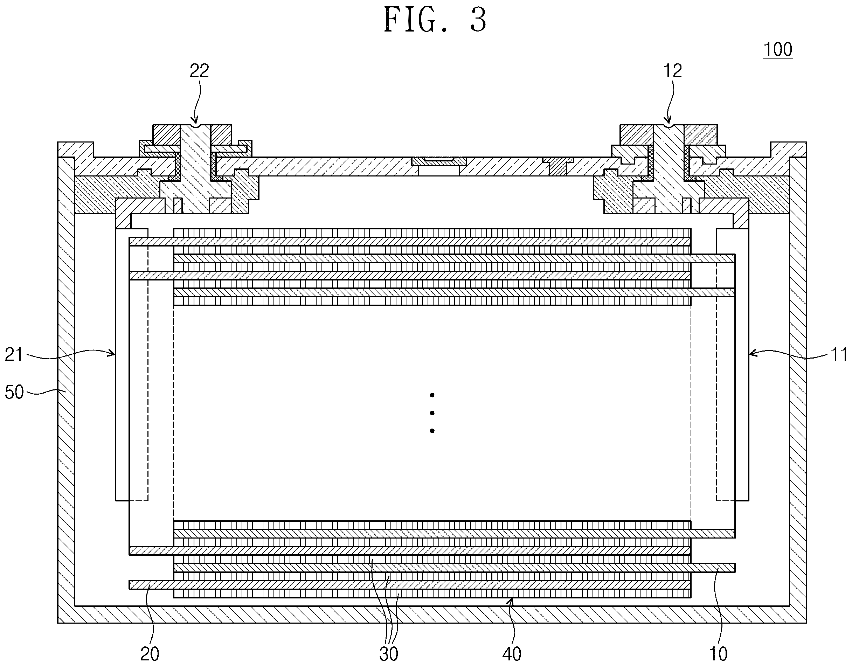

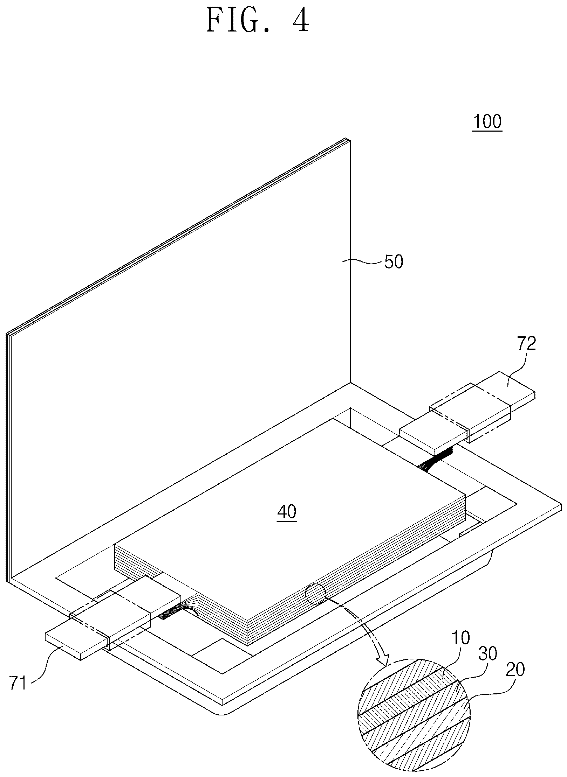

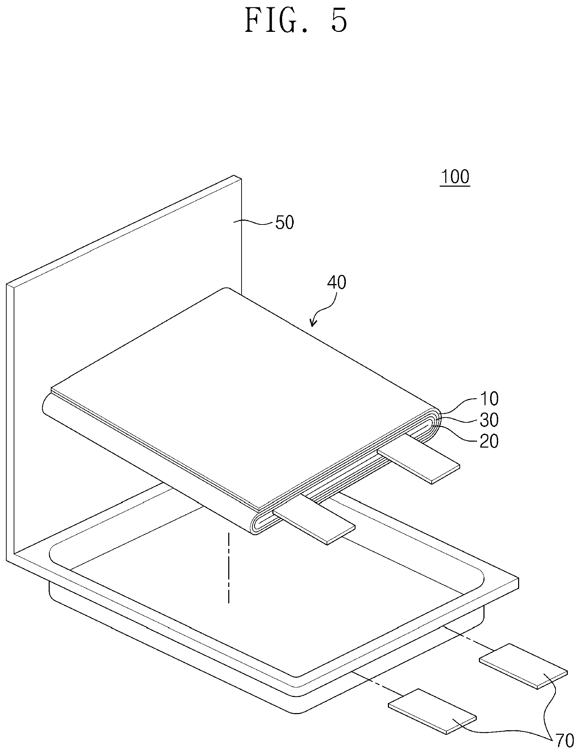

The rechargeable lithium battery may be classified into cylindrical, prismatic, pouch, or coin-type or kind batteries, and/or the like, depending on their shape. FIGS. 2 to 5 are each a schematic view illustrating a rechargeable lithium battery according to one or more embodiments. FIG. 2 shows a cylindrical battery, FIG. 3 shows a prismatic battery, and FIGS. 4 and 5 show pouch-type or kind batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution. The rechargeable lithium battery 100 may include a sealing member 60 sealing the case 50, as shown in FIG. 2. In FIG. 3, the rechargeable lithium battery 100 may include a positive lead tab 11, a positive terminal 12, a negative lead tab 21, and a negative terminal 22. As shown in FIGS. 4 and 5, the rechargeable lithium battery 100 may include an electrode tab 70, which may be, for example, a positive electrode tab 71 and a negative electrode tab 72, serving as an electrical path for inducing the current formed in the electrode assembly 40 to the outside.

The rechargeable lithium battery according to one or more embodiments may be applied to automobiles, mobile phones, and/or one or more suitable types (kinds) of electric devices, as non-limiting examples.

FIG. 6A illustrates an enlarged view showing a positive electrode active material layer of a rechargeable lithium battery according to one or more embodiments of the present disclosure. FIG. 6B is an enlarged view of FIG. 6A.

FIG. 6C illustrates an enlarged view showing a positive electrode active material layer of a rechargeable lithium battery according to one or more embodiments of the present disclosure.

Referring to FIGS. 6A, 6B, and 6C, as discussed above, the positive electrode active material layer AML1 (see FIG. 1) includes a first particle PTC1, a second particle PTC2, a conductive material CDM (e.g., electron conductor), and a binder BND. A plurality of the first particles PTC1 and a plurality of the second particles PTC2 constitute a positive electrode active material according to one or more embodiments of the disclosure.

In one or more embodiments, a content (e.g., amount) of the positive electrode active material (PTC1 and PTC2) in the positive electrode active material layer AML1 may be in a range of about 90 wt% to about 99 wt% relative to about 100 wt% of a total weight of the positive electrode active material layer AML1. Each of the contents of the binder BND and the conductive material CDM may be about 0.5 wt% to about 5 wt% relative to about 100 wt% of the total weight of the positive electrode active material layer AML1.

The binder BND may combine the first particles PTC1, the second particles PTC2, and the conductive material CDM with each other. For example, the binder BND may include at least one selected from among the group consisting of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but embodiments of the present disclosure are not limited thereto.

The conductive material CDM may be used to improve the conductivity (e.g., electrical or electron conductivity) of the positive electrode active material layer AML1. Any conductive material that does not cause a chemical change of the positive electrode active material layer AML1 may be used without limitation as the conductive material CDM. For example, the conductive material CDM may include: a carbon-based material such as natural graphite, artificial graphite, carbon black, acetylene black, Ketjen black, carbon fiber, carbon nano-fiber, and/or carbon nano-tube; a metal-based material containing copper, nickel, aluminium, silver, and/or the like, and having a metal powder or metal fiber form (e.g., in a form of metal powder or metal fibers); a conductive polymer such as a polyphenylene derivative; and/or a (e.g., any suitable) mixture thereof.

**First Particle PTC1**

The first particle PTC1 may include an olivine-based lithium compound represented by Chemical Formula 1.

$$\text{Chemical Formula 1} \qquad \text{Li}_{a1}\text{Mn}_{z1}\text{Fe}_{x1}\text{A}_{y1}\text{PO}_{4-c1}$$

In Chemical Formula 1, $0.8 < a1 \leq 1.2$, $0.8 \leq x1 \leq 0.9$, $0 \leq y1 \leq 0.05$ (e.g. $0.001 \leq y1 \leq 0.05$), $0.1 \leq z1 \leq 0.2$, $0 \leq c1 \leq 0.05$, and $x1 + y1 + z1 = 1$ are satisfied.

"A" includes (e.g., be) at least one element selected from among the group consisting of Ti, Mg, V and Nb. "A" may be a dopant doped in the first particle PTC1.

In an embodiment, "A" may be Ti. If (e.g., when) Ti is doped into the first particle PTC1, aspect of controlling the growth of first primary particles NNP of the first particle PTC1 may be achieved, and as a result, the size of the first primary particles NNP of the first particle PTC1 may be formed smaller. If (e.g., when) Ti is doped into the first particle PTC1, the size of the first primary particles NNP may be grown uniformly (e.g., substantially uniformly), and as a result, low-temperature properties may be improved.

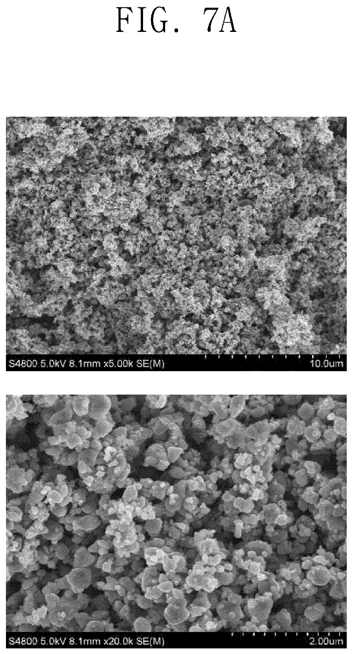

FIG. 6C is an enlarged view of a positive electrode active material layer according to one or more embodiments of the present disclosure. Referring to FIG. 6C and FIG. 7A, the first particles PTC1 may have a single particle form (e.g., in a form of single particles or monolithic particles). In the description, the single particle may refer to a sole particle that does not have a grain boundary inside. The single particle has a morphology phase, and may refer to a single particle, a monolith structure, a monolithic structure, or a non-agglomerated particle, in which the particles exist as an independent phase that are not agglomerated. For example, the single particle may be a single crystal. In one or more embodiments, the single particle may be a particle containing several crystals. The single particle may be a solely separated form. In one or more embodiments, the single particle may be in the form of 2 to 100 first primary particles attached to each other. In the description, the first particle PTC1 that is a single particle may be defined as a first single particle SP1.

In one or more embodiments, an average particle diameter may refer to the diameter (D50) of particles at an accumulated volume of about 50 vol% in a particle size distribution.

The average particle diameter (D50) of the first particles PTC1 may be a value measured by a particle size analyzer. The average particle diameter (D50) of the first single particles SP1 in FIG. 6C may be about 0.1 micrometers ($\mu$m) to about 2.5 $\mu$m. The average particle diameter (D50) of the first single particles SP1 according to one or more embodiments may be smaller than the average particle diameter (D50) of second single particles SP2, which will be explained later.

The first particle PTC1 according to one or more embodiments may include at least one first primary particle (or single particle). If measuring by scanning electron microscope (SEM), the size of at least one first primary particle constituting one first particle PTC1 according to one or more embodiments may be about 100 nm to about 200 nm. In one or more embodiments, the size of the first primary particle may refer to a diameter measured by randomly selecting about 30 first primary particles on a scanning electron microscope image of the positive electrode active material. The size of the first primary particles may be substantially uniform.

In one or more embodiments, the first particle PTC1 may include a first coating layer on a surface thereof. The first coating layer may cover the entire surface of the first particle PTC1 or may cover a portion of the surface of the first particle PTC1. For example, in one or more embodiments, the first coating layer may include carbon and/or a carbon-containing compound.

In one or more embodiments, the first coating layer may further include at least one (e.g., at least one metal-containing compound) selected from the group consisting of a titanium-containing compound, a magnesium-containing compound, and a vanadium-containing compound. The metal-containing compound such as the titanium-containing compound, the magnesium-containing compound, and the vanadium-containing compound may be, for example, a metal oxide, a metal hydroxide, a metal carbonate, a synthesized compound thereof, or a (e.g., any suitable) mixture thereof.

The metal-containing compound may further include other metal or non-metal elements. For example, in one or more embodiments, the metal-containing compound may further include lithium. The first particle PTC1 may exhibit improved structural stability and improved electrical conductivity due to the first coating layer.

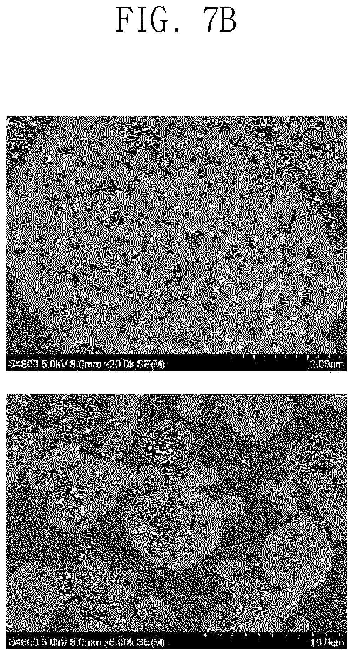

FIGS. 6A and 6B are each an enlarged view of a positive electrode active material layer according to one or more embodiments of the present disclosure. FIG. 7B illustrates SEM images of a positive electrode active material layer according to one or more embodiments of the present disclosure. Referring to FIGS. 6A, 6B, or 7B, in one or more embodiments, the first particle PTC1 may have a polycrystal form (which is different to the single particle form described above) and may include a secondary particle in which at least two or more first primary particles NNP are agglomerated. For example, one first particle PTC1 may include a plurality of first primary particles NNP agglomerated with each other. The first particle PTC1 composed of the plurality of first primary particles NNP may have a spherical or elliptical shape.

In the description, the first particle PTC1 that is a secondary particle may be defined as a first secondary particle PC1 (which is different to the first single particles SP1 defined above).

In one or more embodiments, the first particle PTC1 may include a coating layer on a surface thereof. The coating layer may cover the entire surface of the first particle PTC1 or may cover a portion of the surface of the first particle PTC1. The coating layer may be present in the first particle PTC1. The coating layer may be formed along the interface between the inner particles in the first particle PTC1. For example, in one or more embodiments, the coating layer may include carbon and/or a carbon-containing compound. A substantially uniform coating layer may be formed on the surface of the first particle PTC1, and by the coating layer, structural stability may be improved. By further including the coating layer, electrical conductivity may be improved.

In one or more embodiments, the coating layer may further include at least one (e.g., at least one metal-containing compound) selected from the group consisting of a titanium-containing compound, a magnesium-containing compound, and a vanadium-containing compound. The metal-containing compound such as the titanium-containing compound, the magnesium-containing compound, and the vanadium-containing compound may be, for example, a metal oxide, a metal hydroxide, a metal carbonate, a synthesized compound thereof, or a (e.g., any suitable) mixture thereof. The metal-containing compound may further include other metal or non-metal elements. For example, in one or more embodiments, the metal-containing compound may further include lithium.

In one or more embodiments, the first particle PTC1 may further include a grain boundary coating layer on the surface of each of the first primary particles NNP. The grain boundary coating layer may be present in the first particle PTC1. The grain boundary coating layer may be formed along the interface between the first primary particles **NNP** inside. For example, the grain boundary coating layer may refer to a material coated on the grain boundary in the first particle PTC1.

The grain boundary coating layer may include carbon and/or a carbon-containing compound. In one or more embodiments, the grain boundary coating layer may further include at least one selected from the group consisting of a titanium-containing compound, a magnesium-containing compound, and a vanadium-containing compound.

The interior of the above-described first particle PTC1 may refer to the entire interior of the first particle PTC1 excluding the surface (e.g., outermost surface) of the first particle PTC1. For example, the interior of the first particle PTC1 may refer to an entire interior from a depth of about 10 nm from the surface (e.g., outermost surface) of the first particle PTC1, or a region from a depth of about 10 nm to a depth of about 2 $\mu$m.

Because the first particle PTC1 may further include the grain boundary coating part such as the grain boundary coating layer, structural stability may be reinforced, and a substantially uniform coating layer may be formed on the surface of the first particle PTC1. In addition, because the first particle PTC1 may further include the grain boundary coating part, the electrical conductivity of the first particle PTC1 may be further improved.

In one or more embodiments, the first particle PTC1 may further include carbon derived from the coating layer and/or grain boundary coating layer. A content (e.g., amount) of the carbon element in the first particle PTC1 may be about 0.5 wt% to about 10 wt%, about 1 wt% to about 3 wt%, or about 1.5 wt% to about 2.5 wt%, based on 100 wt% of a total weight of the first particle PTC1. For example, the carbon content (e.g., amount) of the first particle PTC1 with a secondary particle form, shown in FIG. 7B may be greater than the carbon content (e.g., amount) of the first particle PTC1 with a single particle form, shown in FIG. 7A.

In one or more embodiments, the first particle PTC1 may have an agglomerated spherical shape in which a plurality of first primary particles NNP are agglomerated. Through the close agglomeration of the first primary particles NNP, the first particles PTC1 may exhibit the properties as follows. The coating layer and/or grain boundary coating layer of the first particles are maintained well, and electrical conductivity may increase, and low-temperature properties may be improved. By increasing the binding force of electrode plates, the binder capacity may be reduced. In one or more embodiments, the first particles PTC1 may have a spherical or elliptical shape.

In one or more embodiments, the average particle diameter may be measured by a particle size analyzer. The average particle diameter may refer to the diameter of particles at an accumulated volume of about 50 vol% (D50) in a particle size distribution. The average particle diameter (D50) of the first particle PTC1 thus measured may be about 3 $\mu$m to about 10 $\mu$m.

The first particle PTC1 according to one or more embodiments may include at least one first primary particle (or single particle). The size of at least one first primary particle NNP constituting one first particle PTC1 according to one or more embodiments may be about 50 nm to about 150 nm. Compared to the first particle PTC1 that is a single particle, shown in FIG. 6C, the size of the first primary particle NNP constituting the first particle PTC1 that is a secondary particle according to one or more embodiments may be smaller than the first primary particle constituting the first particle PTC1 that is a single particle.

In one or more embodiments, the size of the first primary particles NNP may refer to a diameter measured by optionally selecting about 30 first primary particles NNP on an electron microscope image of the positive electrode active material. The size of the first primary particles NNP may be substantially uniform.

In one or more embodiments, a porosity of the first secondary particles PC1 may be about 20% to about 40%. Here, porosity (n) may be defined as the pore volume ($V_p$) divided by the total volume ($V_t$) of a particle, or

$$n = \frac{V_p}{V_t}.$$

The porosity of the active material particles can be measured using BET (Brunauer-Emmett-Teller) analysis, which determines the specific surface area and pore structure based on gas adsorption. By measuring the amount of gas adsorbed on the material's surface at different pressures, the BET method calculates the specific surface area (SSA) and, when combined with BJH (Barrett-Joyner-Halenda) analysis, provides insights into pore size distribution and pore volume. This method is particularly useful for analyzing nanometer-scale pores (0.5-300 nm) and is widely applied in lithium-ion battery materials to evaluate electrolyte infiltration and ion diffusion pathways.

A span value of the first secondary particles PC1, analyzed by a particle size analyzer, may be about 0.3 to about 0.75. In particle size analysis, the span value is a value that indicates the width of the particle size distribution, or

$$\text{Span} = \frac{D_{90} - D_{10}}{D_{50}}.$$

A lower span value indicates a more uniform particle size distribution, meaning the particles are more consistent in size. Conversely, a higher span value suggests a wider range of particle sizes within the sample.

If (e.g., when) the first particle PTC1 has a secondary particle form, the average particle diameter of the first secondary particles PC1 may be large, and in order to attach the first particles to a current collector COL1 (see FIG. 1), a relatively small amount of a binder BND may be desired or required. For example, in one or more embodiments, a content (e.g., amount) of the binder BND may be about 0.5 wt% to about 3 wt% on the basis of about 100 wt% of a total weight of a positive electrode active material layer AML1.

A rechargeable lithium battery including the positive electrode active material of the present disclosure may have improved low-temperature properties. In one or more embodiments, a capacity at about -20 °C to an initial capacity (capacity at about -20 °C/initial capacity) of the rechargeable lithium battery may be about 40% or more. For example, in one or more embodiments, the capacity at about -20 °C to the initial capacity (capacity at about -20 °C/initial capacity) of the rechargeable lithium battery of the present disclosure may be about 40% to about 100%, about 50% to about 100%, or about 96% to about 99%.

The rechargeable lithium battery including the positive electrode active material of the present disclosure may have an improved operating voltage. In one or more embodiments, an operating voltage range of the rechargeable lithium battery of the present disclosure may be about 3 V to about 5 V. For example, in one or more embodiments, the operating voltage range may be about 3 V to about 4.5 V, or about 3.5 V to about 4 V.

The rechargeable lithium battery including the positive electrode active material of the present disclosure may have improved lifetime characteristics. In one or more embodiments, the rechargeable lithium battery of the present disclosure may have capacity retention of about 98% or more after charging and discharging 50 times with a constant current of about 1.0 C at the above voltage. For example, in one or more embodiments, the capacity retention may be about 98% to about 100%, or about 99.8% to about 100%.

In the present disclosure, the first particle PTC1 may be present as a single particle (e.g., a monolithic particle) and/or a secondary particle (e.g., formed by an agglomeration of primary particles). In the description, both (e.g., simultaneously) the first single particle SP1 and the first secondary particle PC1 may be interpreted to refer to the first particle PTC1. In addition, the first particle PTC1 may be interpreted as containing the first single particle SP1 and the first secondary particle PC1.

**Second Particle PTC2**

The second particle PTC2 may include a layered lithium compound represented by Chemical Formula 2.

**Chemical Formula 2** $\qquad$ $Li_{a2}Ni_{x2}Mn_{z2}X_{c2}O_{2-b2}$

In Chemical Formula 2, $0.8 < a2 \leq 1.2$, $0.7 \leq x2 \leq 0.8$, $0.2 \leq z2 \leq 0.3$, $0 \leq b2 \leq 0.05$, $0 \leq c2 \leq 0.05$ (e.g. $0 < c2 \leq 0.05$), and $x2 + z2 + c2 = 1$ are satisfied.

X includes (e.g., be) at least one element selected from among the group consisting of Al, Ti, Mg, Zr, Mo and Nb. X may be a dopant doped in the second particle PTC2.

A cobalt (Co) content (e.g., amount) in the positive electrode active material may be about 100 ppm or less. For example, the positive electrode active material according to the present disclosure may not substantially include cobalt (Co). The positive electrode active material according to the present disclosure may be a cobalt-free positive electrode active material. The Co content (e.g., amount) in the second particle may be smaller than an Al content (e.g., amount) in the second particle.

The positive electrode active material for a rechargeable lithium battery may include a layered cobalt-free (Co-free) positive electrode active material, a cobalt-free (Co-free) nickel-based positive electrode active material, or a cobalt-free (Co-free) nickel manganese-based positive electrode active material. The cobalt-free (Co-free) may refer to that there is no cobalt, that no cobalt is used, or that only a very small amount of cobalt is contained.

In one or more embodiments, the second particle PTC2 may include a second coating layer on a surface thereof. The second coating layer may cover the entire surface of the second particle PTC2 or may cover a portion of the surface of the second particle PTC2. The second coating layer may include a boron-containing compound, a titanium-containing compound, an aluminium-containing compound, and/or a (e.g., any suitable) combination thereof. The metal-containing compound, such as the boron-containing compound, the titanium-containing compound, and/or the aluminium-containing compound, in the second coating layer may be, for example, a metal oxide, a metal hydroxide, a metal carbonate, a synthesized compound thereof, or a (e.g., any suitable) mixture thereof. The compound constituting the second coating layer may be crystalline or amorphous. In one or more embodiments, the metal-containing compound may further include other metal or non-metal elements. For example, in one or more embodiments, the second coating layer may further include lithium, manganese, and/or nickel. Through surface modification using the second coating layer, a structure may be stabilized, and thermal stability may be improved.

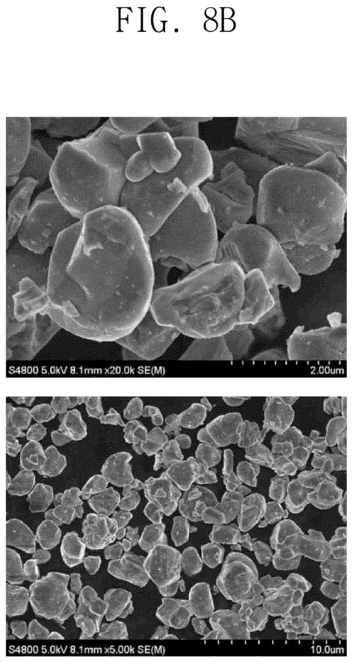

Referring to FIGS. 6A, 6B, 6C, and 8B, in one or more embodiments, a second particle PTC2 may have a single particle form (e.g., in a form of single particles or monolithic particles). In the description, the single particle may refer to a sole particle that does not have a grain boundary inside. The single particle has a morphology phase, and may refer to a single particle, a monolith structure, a monolithic structure, or a non-agglomerated particle, in which the particles exist as an independent phase that are not agglomerated. For example, the single particle may be a single crystal. In one or more embodiments, the single particle may have a form in which a plurality of second primary particles are attached to each other. In one or more embodiments, the single particle may be in the form of 2 to 100 second primary particles attached to each other. In the description, the second particle PTC2 that is a single particle may be defined as a second single particle SP2. In addition, in the description, the second single particle SP2 may be defined as a small particle.

In one or more embodiments, the average particle diameter (D50) may refer to the diameter of particles at an accumulated volume of about 50 vol% in a particle size distribution. The average particle diameter (D50) of the second particle PTC2 may be a value measured by a particle size analyzer. The average particle diameter (D50) of the second single particles SP2 may be about 3 $\mu$m to about 7 $\mu$m. The average particle diameter (D50) of the second single particles SP2 may be greater than the average particle diameter (D50) of the first single particles SP1.

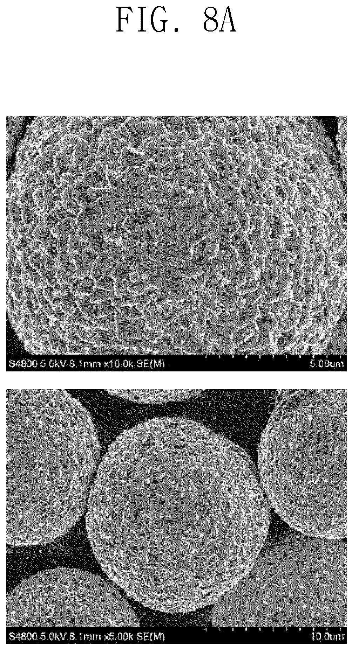

Referring to FIGS. 6A, 6B, 6C, and 8A, in one or more embodiments, the second particle PTC2 may have a polycrystal form (which is different to the single particle form described above) and may include a secondary particle in which at least two or more second primary particles MMP are agglomerated. For example, one second particle (one second secondary particle) PTC2 may include a plurality of second primary particles MMP agglomerated with each other. The second particle PTC2 composed of the plurality of second primary particles MMP may have a spherical or elliptical shape. In the description, the second particle PTC2 that is a secondary particle may be defined as a second secondary particle PC2 (which is different to the second single particles SP2 defined above). In addition, in the description, the second secondary particle PC2 may be defined as a large particle.

In one or more embodiments, an average particle diameter may refer to the diameter (D50) of particles at an accumulated volume of about 50 vol% in a particle size distribution. The average particle diameter (D50) of the second particles PTC2 may be a value measured by a particle size analyzer. Accordingly, the average particle diameter (D50) of the second secondary particles PC2 may be about 12 $\mu$m to about 18 $\mu$m. The average particle diameter (D50) of the second secondary particles PC2 may be greater than the average particle diameter (D50) of first secondary particles PC1.

In the present disclosure, the second particle PTC2 may be present as a single particle and/or a secondary particle. In addition, the second particles PTC2 may be a positive electrode active material including the second single particles SP2 and the second secondary particles PC2.

In the description, both (e.g., simultaneously) the second single particle SP2 and the second secondary particle PC2 may be interpreted to refer to the second particle PTC2. In addition, the second particle PTC2 may be interpreted as containing the second single particle SP2 and the second secondary particle PC2.

In the present disclosure, if the single particle and secondary particle forms coexist in the second particles PTC2 in the positive electrode active material, or if large and small particles coexist, it may be referred to as bimodal. That is, the term "bimodal" may be applied when referring to the second particles PTC2 within the positive electrode active material. This designation is used if there is a coexistence of single particle and secondary particle forms, or a mixture of particles of varying sizes, specifically large and small particles.

Hereinafter, the positive electrode active material according to one or more embodiments of the present disclosure will be explained in more detail. The first particle PTC1 is a lithium iron phosphate-based compound having an olivine structure and is very stable and chemically highly stable. Basically, the lithium iron phosphate-based compound has excellent or suitable lifetime characteristics due to the stable structure compared to other positive electrode materials, but there is phenomenon of deteriorating lifetime characteristics if a high voltage is used, and thus, there is a limit to the use of a voltage. The first particle PTC1 contains manganese (Mn) and may improve high voltage characteristics and energy density compared to common lithium iron phosphate-based compounds.

In the case of the first particle PTC1, manganese (Mn) elution may occur. Thus, the crystal grain size of the first particle PTC1 may become excessively (or substantially) small. As shown in FIG. 6C, if the size of the first particle PTC1 is too small, the bonding force between a current collector and the positive electrode active material may be small or weak, an electrode plate processing may be difficult, and a large amount of binder may be desired or required.

As shown in FIGS. 6A and 6B, if the first particles PTC1 are formed into secondary particles, the bonding force with an electrode plate may increase, and the content (e.g., amount) of the binder BND may decrease. If the first particles PTC1 are formed into secondary particles, the carbon coating may be maintained well, conductivity may increase, and low-temperature properties may be improved. As a result, capacity may increase, and lifetime characteristics may be improved.

The second particle PTC2 may include a Co-free lithium nickel manganese-based oxide. The second particle PTC2 may not substantially include cobalt (Co) but may include nickel, manganese, and/or the like, as main components. The positive electrode active material including the second particles PTC2 may be economic and accomplish high energy density.

Because the lithium nickel manganese-based oxide has a higher mixture density if pressed than a compound with an olivine structure, defect of low electrode density of a phosphate compound with an olivine structure may be alleviated.

In the present disclosure, density properties, high-temperature stability, and lifetime characteristics of the positive electrode may be improved by mixing the first particles PTC1 with the second particles PTC2 in an appropriate or suitable ratio. In addition, by mixing the second particles in a bimodal form of large and small particles, even more improved density may be achieved.

In one or more embodiments, a content (e.g., amount) of the first particles PTC1 may be about 60 wt% to about 90 wt% based on 100 wt% of the total content (e.g., amount) of the first particles PTC1 and the second particles PTC2 in the positive electrode active material. In one or more embodiments, a content (e.g., amount) of the large particles of the second particles PTC2 may be about 60 wt% to about 80 wt% relative to the total content (e.g., amount) of the second particles PTC2 in the positive electrode active material. In one or more embodiments, a content (e.g., amount) of the small particles of the second particles PTC2 may be about 20 wt% to about 40 wt% relative to the total content (e.g., amount) of the second particles PTC2 in the positive electrode active material. In one or more embodiments, a manganese (Mn) content (e.g., amount) in the first particles PTC1 may be less than a manganese (Mn) content (e.g., amount) in the second particles PTC2 in the positive electrode active material. In one or more embodiments, a mixture (e.g. pellet) density of the positive electrode active material of the present disclosure may be about 2.5 g/cc to about 3.0 g/cc. The pellet density is determined by measuring the mass and volume of the electrode after calendaring (pressing) and is expressed in g/cm$^3$(or g/cc). It is calculated as:

Pellet Density= Mass of the electrode active material layer (g)/ Volume of electrode active material layer (cm$^3$)

The volume is obtained by multiplying the electrode area (Width $\times$ Length) with its thickness measured using a micrometer. For high-precision analysis, methods such as X-ray CT, Mercury Porosimetry, and Helium Pycnometry can be used to assess internal porosity and density variations. Optimizing electrode density is important for achieving high energy density, proper electrolyte infiltration, and improved lithium-ion diffusion in lithium-ion battery electrodes.

### Comparative Example 1-1: Preparation of First Particles in Single Particle Form

A $FePO_4$ iron phosphate precursor and lithium carbonate in a molar ratio of about 1:1.03 were added to water. In addition, 7 wt% of glucose based on the total mass of the mixture was additionally added thereto. A wet grinding process was performed by a ball milling with respect to the mixture. The mixture was heated and dried in a heating furnace tray, and put in a vacuum oven for drying at about 85 °C for about 4 hours. The dried mixture was baked under a nitrogen atmosphere at about 650 °C for about 10 hours. The baked product was ground to obtain first particles in a single particle form.

### Comparative Example 1-2: Preparation of First Particles in Single Particle Form

A doping amount of Ti in the first particle was increased to about 2000 ppm in Comparative Example 1-1.

### Preparation Example 1-3: Preparation of First Particles in Single Particle Form

A $FePO_4$ iron phosphate precursor, a $MnPO_4$ manganese phosphate, and lithium carbonate in a molar ratio of about 0.85:0.15:1.03 were added to water. In addition, 7 wt% of glucose based on the total mass of the mixture and 2000 ppm of $TiO_2$ were additionally added thereto. A wet grinding process was performed by a ball milling with respect to the mixture. The mixture was heated and dried in a heating furnace tray, and put in a vacuum oven for drying at about 85 °C for about 4 hours. The dried mixture was baked under a nitrogen atmosphere at about 650 °C for about 10 hours. The baked product was ground to obtain first particles in a single particle form.

### Comparative Example 1-4: Preparation of First Particles in Secondary Particle Form

A $FePO_4$ iron phosphate precursor and lithium carbonate in a molar ratio of about 1:1.03 were added to water. In addition, 7 wt% of glucose based on the total mass of the mixture and 2000 ppm of $TiO_2$ were additionally added thereto. A wet grinding process was performed by a ball milling with respect to the mixture. The mixture was heated and dried by spray drying (i.e., the mixture underwent evaporation, heating, and was subsequently dried using a spray dryer, i.e., underwent a heating and drying process through spray drying) with a spray pressure of about 0.5 MPa and temperature conditions of about 230 °C. The dried mixture was baked under a nitrogen atmosphere at about 700 °C for about 10 hours to obtain a positive electrode active material in a secondary particle form.

**Preparation Example 1-5: Preparation of First Particles in Secondary Particle Form**

A $FePO_4$ iron phosphate precursor, a $MnPO_4$ manganese phosphate, and lithium carbonate in a molar ratio of about 0.85:0.15:1.03 were added to water. In addition, 7 wt% of glucose based on the mass of the mixture and 2000 ppm of $TiO_2$ were additionally added thereto. A wet grinding process was performed by a ball milling with respect to the mixture. The doping amount of Mn in the first particles was increased to about 109,600 ppm compared to Comparative Example 1-4.

The mixture which was a slurry was heated and dried by spray drying (i.e., the mixture underwent evaporation, heating, and was subsequently dried using a spray dryer, i.e., underwent a heating and drying process through spray drying) with a spray pressure of about 0.5 MPa and temperature conditions of about 230 °C. The dried mixture was baked under a nitrogen atmosphere at about 700 °C for about 10 hours to obtain a positive electrode active material in a secondary particle form.

**Preparation Example 1-6: Preparation of Second Particles in Single Particle Form**

$Ni_{0.75}Mn_{0.23}Al_{0.02}(OH)_2$ and LiOH were mixed in a molar ratio of about 1:1.05 and first heat treatment was performed under an oxygen atmosphere at about 900 °C for about 8 hours to form a second oxide having a composition of $Li_{1.05}Ni_{0.75}Mn_{0.23}Al_{0.02}O_2$, and an average particle diameter (D50) of about 4 $\mu$m. Aluminium oxide was added to the oxide and second heat treatment was performed under an oxygen atmosphere at about 825 °C for about 8 hours to prepare a positive electrode active material.

**Preparation Example 1-7: Preparation of Second Particles in Secondary Particle Form**

$Ni_{0.75}Mn_{0.23}Al_{0.02}(OH)_2$ and LiOH were mixed in a molar ratio of about 1:1.05 and first heat treatment was performed under an oxygen atmosphere at about 850 °C for about 8 hours to form a second oxide having a composition of $Li_{1.05}Ni_{0.75}Mn_{0.23}Al_{0.02}O_2$, and an average particle diameter (D50) of about 14 $\mu$m. Aluminium oxide was added to the oxide and second heat treatment was performed under an oxygen atmosphere at about 825 °C for about 8 hours to prepare a positive electrode active material.

Second particles having a composition of $LiNi_{0.75}Mn_{0.22}Al_{0.03}O_2$ was formed in a secondary particle form in which a plurality of primary particles were agglomerated.

**Preparation Example 1-8: Preparation of Second Particles in Bimodal Form**

Second particles in a mixture form of the second particles of Preparation Example 1-6 and the second particles of Preparation Example 1-7 were prepared.

**Example 1-1: Preparation of Mixture of First Particles and Second Particles**

A positive electrode active material was prepared by mixing the first particles of Preparation Example 1-5 and the second particles of Preparation Example 1-6 in a weight ratio (e.g., amount) of about 70:30.

**Example 1-2: Preparation of Mixture of First Particles and Second Particles**

A positive electrode active material was prepared by mixing the first particles of Preparation Example 1-5 and the second particles of Preparation Example 1-8 in a weight ratio (e.g., amount) of about 80:20.

**Example 1-3: Preparation of Mixture of First Particles and Second Particles**

A positive electrode active material was prepared by mixing the first particles of Preparation Example 1-5 and the second particles of Preparation Example 1-8 in a weight ratio (e.g., amount) of about 70:30.

**Example 1-4: Preparation of Mixture of First Particles and Second Particles**

A positive electrode active material was prepared by mixing the first particles of Preparation Example 1-5 and the second particles of Preparation Example 1-8 in a weight ratio (e.g., amount) of about 60:40.

The positive electrode active materials thus prepared are summarized in Table 1.

Table 1

| Example | Form | Amount doped | | |
|---|---|---|---|---|
| | | Ti-doping (ppm) | Mn-doping (ppm) | Al-doping (ppm) |
| Comparative Example 1-1 | Single particles | 0 | 0 | 0 |
| Comparative Example 1-2 | Single particles | 2,000 | 0 | 0 |
| Preparation Example 1-3 | Single particles | 2,000 | 109,600 | 0 |
| Comparative Example 1-4 | Secondary particles | 2,000 | 0 | 0 |
| Preparation Example 1-5 | Secondary particles | 2,000 | 109,600 | 0 |
| Preparation Example 1-6 | Small single crystal | 0 | 0 | 1,400 |
| Preparation Example 1-7 | Large polycrystal | 0 | 0 | 8,000 |
| Preparation Example 1-8 | Large polycrystal 70 + Small single crystal 30 | 0 | 0 | 6,020 |
| Example 1-1 | First particles (Preparation Example 1-5) 70 wt% + second particles (Preparation Example 1-6) 30 wt% | | | |
| Example 1-2 | First particles (Preparation Example 1-5) 80 wt% + second particles (Preparation Example 1-8) 20 wt% | | | |
| Example 1-3 | First particles (Preparation Example 1-5) 70 wt% + second particles (Preparation Example 1-8) 30 wt% | | | |
| Example 1-4 | First particles (Preparation Example 1-5) 60 wt% + second particles (Preparation Example 1-8) 40 wt% | | | |

**Manufacture of Positive Electrode**

95 wt% of a final positive electrode active material, 3 wt% of a polyvinylidene fluoride binder, and 2 wt% of a carbon black conductive material were mixed in an N-methyl pyrrolidone solvent to prepare a positive electrode active material slurry. The positive electrode active material slurry was applied on an aluminum current collector, dried and rolled to manufacture a positive electrode.

**Manufacture of Negative Electrode**

Graphite, a binder, and a conductive material were mixed in an N-methyl pyrrolidone solvent to prepare a negative electrode active material slurry. The negative electrode active material slurry was applied on a copper current collector, dried and rolled to manufacture a negative electrode.

**Fabrication of Rechargeable Lithium Battery**

A 2032 type or kind coin half-cell was formed using the positive electrode prepared and a lithium metal counter electrode as the counter electrode. A separator (thickness: about 16 $\mu$m) composed of a porous polyethylene (PE) film was arranged between the positive electrode and the lithium metal counter electrode, and an electrolyte solution was injected to fabricate a rechargeable lithium battery. As the electrolyte, an electrolyte solution obtained by mixing 1.3 M LiPF$_6$ with a mixture solvent of ethylene carbonate (EC): diethyl methyl carbonate (EMC): dimethyl carbonate (DMC) in a volume ratio of about 3:4:3 was used.

**Evaluation Example 1: Analysis on the Surface of Positive Electrode Active Material**

The scanning electron microscope (SEM) images of the first particles prepared in Preparation Example 1-3 are shown in FIG. 7A. The SEM images of the first particles prepared in Preparation Example 1-5 are shown in FIG. 7B. The SEM images of the second particles prepared in Preparation Example 1-6 are shown in FIG. 8B. The SEM images of the second particles prepared in Preparation Example 1-7 are shown in FIG. 8A. Referring to FIG. 7A, it can be confirmed that the first particles are primary particles with several nanometers in size. Referring to FIG. 7B, it can be confirmed that the first particles are spherical secondary particles with several micrometers in size. Referring to FIGS. 8A and 8B, it can be confirmed that the second particles are particles having an average particle diameter greater than the first particles.

**Evaluation Example 2: Evaluation of Battery Properties**

The properties of the rechargeable lithium batteries fabricated using the positive electrode active materials of the Examples, Preparation Examples, and Comparative Examples were evaluated.

Rechargeable lithium batteries each were initially charged under constant current (about 0.2 C) conditions, and after resting for about 10 minutes, discharged under constant current (about 0.2 C) conditions until about 3.0 V to carry out initial charging and discharging to evaluate an average voltage. Then, charging and discharging were repeated at about 45 °C with about 1.0 C/1.0 C. Additionally, a coin cell was formed and was initially charged under constant current (about 0.2 C) conditions, and after resting for about 10 minutes, discharged under constant current (about 0.2 C) conditions until about 3.0 V, and then, additionally charged, and capacity at about -20 °C was measured. The evaluation results on battery properties are shown in Table 2.

Table 2

| | Coin cell | | | | | | |
|---|---|---|---|---|---|---|---|
| | Evaluation voltage (V) | Average voltage (V) | Charge amount (mAh/g) | Discharge amount (mAh/g) | Efficiency (%) | -20 °C capacity (mAh/g) | Lifetime (%, @50cy) |
| Comparative Example 1-1 | 3.80 | 3.20 | 164.1 | 156.1 | 95.1 | 43 | 94.3 |
| Comparative Example 1-2 | 3.80 | 3.20 | 164.3 | 156.2 | 95.1 | 58 | 97.2 |
| Comparative Example 1-2 | 4.30 | 3.20 | 165.2 | 156.1 | 94.5 | 50 | 93.2 |
| Preparation Example 1-3 | 4.30 | 3.31 | 155.5 | 147.0 | 94.6 | 85 | 96.2 |
| Comparative Example 1-4 | 4.30 | 3.20 | 165.7 | 161.1 | 97.2 | 87 | 97.2 |
| Preparation Example 1-5 | 4.30 | 3.31 | 157.0 | 151.5 | 96.5 | 103 | 98.5 |
| Preparation Example 1-5 | 4.45 | 3.31 | 159.2 | 152.5 | 95.8 | 102 | 96.0 |
| Preparation Example 1-6 | 4.45 | 3.69 | 221.3 | 196.3 | 88.7 | 65 | 98.4 |
| Preparation Example 1-7 | 4.45 | 3.69 | 230.0 | 195.0 | 84.8 | 55 | 96.5 |
| Preparation Example 1-8 | 4.45 | 3.69 | 227.4 | 195.4 | 85.9 | 58 | 97.1 |
| Example 1-1 | 4.45 | 3.42 | 178.2 | 165.0 | 92.6 | 91 | 98.0 |
| Example 1-2 | 4.45 | 3.39 | 173.5 | 162.1 | 93.4 | 87 | 96.5 |
| Example 1-3 | 4.45 | 3.42 | 180.1 | 166.2 | 92.3 | 85 | 96.8 |
| Example 1-4 | 4.45 | 3.46 | 186.2 | 169.9 | 91.2 | 82 | 96.3 |

Referring to Table 2, it can be found that Example 1-1 of the present disclosure corresponds to a mixture of the first particles PTC1 and the second particles PTC2 that are single particles, and a voltage was increased and charge/discharge amounts were increased compared to Comparative Example 1-4 and Preparation Examples 1-5 to 1-7.

Each of the positive electrode active materials according to Examples 1-2 to 1-4 of the present disclosure is characterized in that the second particles PTC2 have a bimodal form, different from Example 1-1. As a result, it can be found that Examples 1-2 to 1-4 each exhibit increased evaluation voltage and average voltage compared to rechargeable batteries according to Preparation Examples 1-4 and 1-5, and exhibit certain improved performance even compared to Example 1-1.

In addition, it can be found that each of the rechargeable batteries according to Examples 1-1 to 1-4 exhibit increased charge/discharge efficiency and markedly improved capacity at about -20 °C compared to rechargeable batteries according to Preparation Examples 1-6 to 1-8.

**Evaluation Example 3: Evaluation of Density Properties of Active Materials**

The average pellet density (PD) and capacity per volume of each of the positive electrode active materials of the Examples, Preparation Examples, and Comparative Examples were measured, and the results are shown in Table 3.

Table 3

|  | Mixture density (g/cc) | Capacity per volume (mAh/cc) |
|---|---|---|
| Comparative Example 1-1 | 2.40 | 374.6 |
| Comparative Example 1-2 | 2.41 | 376.4 |
| Preparation Example 1-3 | 2.37 | 348.5 |
| Comparative Example 1-4 | 2.5 | 394.6 |
| Preparation Example 1-5 | 2.46 | 372.8 |
| Preparation Example 1-6 | 3.10 | 608.5 |
| Preparation Example 1-7 | 3.00 | 585.0 |
| Preparation Example 1-8 | 3.50 | 683.9 |
| Example 1-1 | 2.60 | 429.0 |
| Example 1-2 | 2.65 | 429.6 |
| Example 1-3 | 2.75 | 457.1 |
| Example 1-4 | 2.80 | 475.7 |

Referring to Table 3, it can be found that the positive electrode active material according to Example 1-1 of the present disclosure exhibits increased mixture density and capacity per unit volume compared to the positive electrode active materials according to Comparative Example 1-4 and Preparation Examples 1-3 to 1-5.

Each of the positive electrode active materials according to Examples 1-2 to 1-4 of the present disclosure is a mixture in which the second particles PTC2 are a bimodal form, and it can be found that average mixture density and capacity per volume were even more increased compared to the positive electrode active material according to Example 1-1.

A positive electrode active material according to one or more embodiments of the present disclosure may have improved mixture density, capacity, high voltage properties, and energy density by mixing olivine-based first particles with several micrometers in size and layered second particles with several micrometers in size. A positive electrode active material layer according to one or more embodiments of the present disclosure may be smoothly attached to a positive electrode current collector even with a relatively small amount of a binder. A rechargeable lithium battery according to one or more embodiments of the present disclosure may have (e.g., be charged at) a relatively high average voltage.

In the present disclosure, expressions such as "at least one of," "one of," and "selected from," when preceding a list of elements, modify the entire list of elements and do not modify the individual elements of the list. For example, "at least one of a, b or c", "at least one selected from a, b, and c", "at least one selected from among a to c", etc., may indicate only a, only b, only c, both (e.g., simultaneously) a and b, both (e.g., simultaneously) a and c, both (e.g., simultaneously) b and c, all of a, b, and c, or variations thereof. The "/" utilized herein may be interpreted as "and" or as "or" depending on the situation.

In the context of the present disclosure and unless otherwise defined, the terms "use," "using," and "used" may be considered synonymous with the terms "utilize," "utilizing," and "utilized," respectively.

In present disclosure, The term "Group" as utilized herein refers to a group of the Periodic Table of Elements according to the 1 to 18 grouping system of the International Union of Pure and Applied Chemistry ("IUPAC").

As used herein, the terms "substantially," "about," and similar terms are used as terms of approximation and not as terms of degree, and are intended to account for the inherent deviations in measured or calculated values that would be recognized by those of ordinary skill in the art. "About" or "approximately," as used herein, is also inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations,

or within $\pm$ 30%, 20%, 10%, or 5% of the stated value.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

An electrode active material manufacturing apparatus, a battery manufacturing device, a battery management system (BMS) device, and/or any other relevant devices or components according to embodiments of the present disclosure described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

Although one or more embodiments of the present disclosure have been described, it is understood that the present disclosure should not be limited to these embodiments but one or more suitable changes and modifications can be made by one ordinary skilled in the art within the scope of the present disclosure as hereinafter claimed and equivalents thereof.

**Claims**

1. A positive electrode active material, comprising:

   a plurality of first particles each comprising a compound of Chemical Formula 1; and
   a plurality of second particles each comprising a compound of Chemical Formula 2:

   Chemical Formula 1       $Li_{a1}Mn_{z1}Fe_{x1}A_{y1}PO_{4-c1}$

   in Chemical Formula 1, $0.8 < a1 \leq 1.2$, $0.8 \leq x1 \leq 0.9$, $0 \leq y1 \leq 0.05$, $0.1 \leq z1 \leq 0.2$, $0 \leq c1 \leq 0.05$, $x1 + y1 + z1 = 1$, and A comprises at least one element selected from among the group consisting of Ti, Mg, V and Nb,

   Chemical Formula 2       $Li_{a2}Ni_{x2}Mn_{z2}X_{c2}O_{2-b2}$

   in Chemical Formula 2, $0.8 < a2 \leq 1.2$, $0.7 \leq x2 \leq 0.8$, $0.2 \leq z2 \leq 0.3$, $0 \leq b2 \leq 0.05$, $0 \leq c2 \leq 0.05$, $x2 + z2 + c2 = 1$, and X comprises at least one element selected from among the group consisting of Al, Ti, Mg, Zr, Mo and Nb, wherein a cobalt (Co) content in the positive electrode active material is about 100 ppm or less.

2. The positive electrode active material as claimed in claim 1, wherein the second particles comprise small particles and large particles.

3. The positive electrode active material as claimed in claim 2, wherein an average particle diameter of the small particles of the second particles is about 3 $\mu$m to about 7 $\mu$m.

4. The positive electrode active material as claimed in claim 2 or claim 3, wherein an average particle diameter of large particles of the second particles is about 12 $\mu$m to about 18 $\mu$m.

5. The positive electrode active material as claimed in any one of claims 2 to 4, wherein a content of the large particles of the second particles is about 60 wt% to about 80 wt% on the basis of a total content of the second particles.

6. The positive electrode active material as claimed in any one of claims 1 to 5, wherein a content of the first particles is about 60 wt% to about 90 wt% on the basis of a total content of the first particles and the second particles.

7. The positive electrode active material as claimed in any one of claims 1 to 6, wherein z1 is less than z2.

8. The positive electrode active material as claimed in any one of claims 1 to 7, wherein the first particles have a secondary particle form in which a plurality of first primary particles are agglomerated.

9. The positive electrode active material as claimed in claim 8, wherein an average particle diameter (D50) of the first particles is about 3 $\mu$m to about 10 $\mu$m.

10. The positive electrode active material as claimed in claim 8 or claim 9, wherein a size of first primary particles of the first particles is about 50 nm to about 150 nm.

11. The positive electrode active material as claimed in any one of claims 8 to 10, wherein a span value of the first particles, analyzed by a particle size analyzer, is about 0.3 to about 0.75.

12. The positive electrode active material as claimed in any one of claims 8 to 11, wherein a porosity of the first particles is about 20% to about 40%.

13. The positive electrode active material as claimed in any one of claims 1 to 12, wherein a pellet density of the positive electrode active material is about 2.5 g/cc to about 3.0 g/cc.

14. A positive electrode, the positive electrode comprising:

    a positive electrode current collector; and
    a positive electrode active material layer on the positive electrode current collector,
    wherein the positive electrode active material layer comprises the positive electrode active material as claimed in any one of claims 1 to 13, a conductive material, and a binder, and
    wherein the positive electrode is for a rechargeable lithium battery.

15. A rechargeable lithium battery, comprising:

    the positive electrode as claimed in claim 14;
    a negative electrode comprising a negative electrode current collector and a negative electrode active material layer on the negative electrode current collector; and
    a separator between the positive electrode and the negative electrode.

# FIG. 1

# FIG. 2

# FIG. 3

EP 4 651 223 A1

# FIG. 4

# FIG. 5

# FIG. 6A

# FIG. 6B

# FIG. 6C

# FIG. 7A

# FIG. 7B

# FIG. 8A

# FIG. 8B

## EUROPEAN SEARCH REPORT

Application Number

EP 25 16 8984

Europäisches
Patentamt
European
Patent Office
Office européen
des brevets

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 060 760 A1 (LG ENERGY SOLUTION LTD [KR]) 21 September 2022 (2022-09-21) * page 3, paragraph 0017 - page 10, paragraph 0097; figures 1, 2; table 1 * ----- | 1-15 | INV. H01M4/131 H01M4/136 H01M4/36 H01M4/505 |
| X | US 2015/349334 A1 (DUMONT ERWAN [FR] ET AL) 3 December 2015 (2015-12-03) * page 3, paragraph 0064 - page 6, paragraph 0134; claims 20-39; figures 1-6; table 1 * ----- | 1-15 | H01M4/525 H01M4/58 H01M10/0525  ADD. H01M4/02 |
| T | "A Basic Guide to Particle Characterization", Malvern Instruments Worldwide - White Paper, 2 May 2012 (2012-05-02), pages 1-26, XP055089322, Retrieved from the Internet: URL:http://golik.co.il/Data/ABasicGuidtoPa rticleCharacterization(2)_1962085150.pdf [retrieved on 2020-05-15] * the whole document * ----- | 3,4,9,10 | |

**TECHNICAL FIELDS SEARCHED (IPC)**

H01M

The present search report has been drawn up for all claims

| Place of search | Date of completion of the search | Examiner |
|---|---|---|
| Munich | 7 October 2025 | Polisski, Sergej |

EPO FORM 1503 03.82 (P04C01)

## ANNEX TO THE EUROPEAN SEARCH REPORT
## ON EUROPEAN PATENT APPLICATION NO.

EP 25 16 8984

This annex lists the patent family members relating to the patent documents cited in the above-mentioned European search report.
The members are as contained in the European Patent Office EDP file on
The European Patent Office is in no way liable for these particulars which are merely given for the purpose of information.

07-10-2025

| Patent document cited in search report | | Publication date | Patent family member(s) | | Publication date |
|---|---|---|---|---|---|
| EP 4060760 | A1 | 21-09-2022 | CN | 114788042 A | 22-07-2022 |
| | | | EP | 4060760 A1 | 21-09-2022 |
| | | | JP | 7536381 B2 | 20-08-2024 |
| | | | JP | 2023506034 A | 14-02-2023 |
| | | | KR | 20210080249 A | 30-06-2021 |
| | | | US | 2023104184 A1 | 06-04-2023 |
| | | | WO | 2021125873 A1 | 24-06-2021 |
| US 2015349334 | A1 | 03-12-2015 | EP | 2939296 A1 | 04-11-2015 |
| | | | FR | 3000302 A1 | 27-06-2014 |
| | | | KR | 20150110510 A | 02-10-2015 |
| | | | US | 2015349334 A1 | 03-12-2015 |
| | | | WO | 2014102071 A1 | 03-07-2014 |

EPO FORM P0459

For more details about this annex : see Official Journal of the European Patent Office, No. 12/82